# EUROPEAN PATENT APPLICATION

(11) **EP 2 732 898 A1**
(43) Date of publication of application: **21.05.2014**
(21) Application number: 13192147.0
(22) Date of filing: 08.11.2013
(51) Int. Cl.: B23K 1/00, B23K 20/233, B23K 20/24, B23K 35/02, B32B 15/01, C22C 21/02, C22C 21/10, C22F 1/043, C22F 1/053, F28F 21/08

(54) **Aluminum-alloy brazing sheet and method of manufacturing same**

(30) Priority: 14.11.2012 JP 2012250155
(71) Applicant: UACJ Corporation, Tokyo 100-0004 (JP)
(72) Inventor: FUKUMOTO, Atsushi, Tokyo, 100-0004 (JP)
(74) Representative: Sokolowski, Fabian

(57) **Abstract**

An aluminum-alloy brazing sheet having good corrosion resistance is provided. The aluminum-alloy brazing sheet comprises a core made of an aluminum alloy, a brazing filler metal made of an Al-Si based alloy and clad on one surface of the core, and a sacrificial anode material clad on the other surface of the core, the sacrificial anode material containing Zn: 1.0 to 6.0 mass%, Si: 0.5 to 1.5 mass%, Fe: 0.5 to 1.5 mass%, and Ti: 0.05 to 0.20 mass%, the core containing Si: 0.5 to 1.2 mass%, Fe: 0.05 to 0.60 mass%, Cu: 0.3 to 1.0 mass%, Mn : 0.5 to 1.6 mass%, and Ti: 0.05 to 0.20 mass%, and Vickers hardness of the sacrificial anode material after heating conducted in the same way as the brazing of the brazing sheet being not less than 30 Hv. A method of manufacturing the aluminum-alloy brazing sheet is also provided.

## Description

### TECHNICAL FIELD

The present invention relates to an aluminum-alloy brazing sheet for use in a vehicular heat exchanger. More particularly, the present invention relates to an aluminum-alloy brazing sheet, which has high corrosion resistance and which is suitably used as a member constituting a channel for cooling water in a radiator, a heater core, etc., and also relates to a method of manufacturing the aluminum-alloy brazing sheet.

### BACKGROUND ART

An aluminum alloy is light-weight and has high thermal conductivity. Therefore, the aluminum alloy is used in vehicular heat exchanger components, such as a radiator, a condenser, an evaporator, a heater core, and an intercooler, for example. The vehicular heat exchangers are mainly manufactured by brazing. Usually, the brazing is carried out at high temperature of about 600 °C by employing a brazing filler metal made of an Al-Si based alloy. Although such brazing can be practiced using various methods, it is general to carry out the brazing in N₂ gas by employing fluoride-based flux, which is non-corrosive flux.

Meanwhile, in recent years, with an increasing demand for lighter weight of a vehicle, studies have been conducted with intent to reduce the weight of the vehicular heat exchanger and to reduce wall thickness of various members constituting the heat exchanger. To realize the thinner wall of each member, a material having higher strength and corrosion resistance after the brazing than the known materials is required.

Hitherto, as material of tubes for heat exchangers like vehicular radiators and heater cores in which cooling water is circulated through the inner side of the tubes, there has been used a sheet formed, for example, by cladding a sacrificial anode material made of, e.g., an Al-Zn based alloy, on an inner surface of a core made of, e.g., a JIS 3003 alloy, and by cladding a brazing filler metal made of, e.g., an Al-Si based alloy on an atmosphere-side surface of the core.

When the Al-Zn based alloy is arranged on the cooling water side, Zn added to the sacrificial anode material is diffused into the core during the brazing, thus forming a Zn diffused layer. It is known that with the presence of the Zn diffused layer, corrosion generated in the sacrificial anode material is caused to progress in a way spreading along the core surface even after reaching the core, and that the occurrence of piercing corrosion can be avoided for a long term.

Cooling water used in radiators and heater cores includes various types of aqueous solutions (long-life coolants: LLC) containing an anti-freezing fluid and having neutral or faintly alkaline properties. Among them, some types have pH of about 10. The tube material using the Al-Zn based alloy for the sacrificial anode material has the problem that a sufficient sacrificial anticorrosion effect is not obtained in the above-mentioned environment, and piercing corrosion may occur in an earlier stage. Another problem is that, when the cooling water flows through the tube at a fast speed, piercing corrosion may occur due to erosion corrosion, thus shortening the lifetime of the heat exchanger.

JP H11-80871 A discloses an aluminum-alloy clad sheet for a heat exchanger, the clad sheet including an aluminum-alloy brazing filler metal clad on one surface of a core made of an aluminum alloy and a sacrificial anode material clad on the other surface of the core, wherein a compound present in a matrix of the sacrificial anode material is a compound of Al and one or any combination of Fe, Ni, Si, Mn and Co.

In the disclosed aluminum-alloy clad sheet for the heat exchanger, an additive ingredient to the sacrificial anode material is selected such that the compound having a predetermined composition is formed in the matrix of the sacrificial anode material. However, the sacrificial anode material disclosed in JP H11-80871 A has a problem that its hardness is insufficient and the occurrence of piercing corrosion due to erosion corrosion cannot be suppressed when the alkaline cooling water flows at a fast speed. Thus, the related art referred to above has a difficulty in providing a material of thin thickness which is capable of exhibiting sufficient corrosion resistance under corrosive environments where the alkaline cooling water flows at a fast speed.

### SUMMARY OF THE INVENTION

### Technical Problem

The present invention has been accomplished in view of the difficulty which could not be solved by the related art. An object of the present invention is therefore to provide an aluminum-alloy brazing sheet₇ which exhibits good corrosion resistance even in a heat exchanger used in alkaline corrosive environment that is brought about by the alkaline cooling water, the heat exchanger being also able to be exposed to fast-speed flow of cooling water. The aluminum-alloy brazing sheet according to the present invention can suitably be used as a channel constituting member for a vehicular heat exchanger.

### Solution to Technical Problem

As a result of conducting intensive studies on solution of the above-described problems, the inventor has accomplished the present invention based on the finding that good corrosion resistance can be obtained by preparing an aluminum-alloy brazing sheet with components made of particular alloy composition, and by raising hardness of a sacrificial anode material up to a predetermined degree or more after the aluminum alloy brazing sheet was heated equivalently to a brazing treatment.

The present invention provides an aluminum-alloy brazing sheet comprising a core made of an aluminum alloy, a brazing filler metal made of an Al-Si based alloy and clad on one surface of the core, and a sacrificial anode material clad on the other surface of the core, the aluminum-alloy brazing sheet being featured in that the sacrificial anode material is configured to be made of an aluminum alloy containing Si: 0.5 to 1.5 mass%, Fe: 0.5 to 1.5 mass%, Zn: 1.0 to 6.0 mass%, and Ti: 0.05 to 0.20 mass%, the balance of Al and unavoidable impurities, the core is made of an aluminum alloy containing Si: 0.5 to 1.2 mass%, Fe: 0.05 to 0.60 mass%, Cu: 0.3 to 1.0 mass%, Mn : 0.5 to 1.6 mass%, and Ti: 0.05 to 0.20 mass%, the balance of Al and unavoidable impurities, and Vickers hardness of the sacrificial anode material being not less than 30 Hv after the aluminum alloy brazing sheet was heated equivalently to a brazing treatment.

The aluminum-alloy brazing sheet according to the present invention is further featured in that the core is further configured to contain Mg: 0.05 to 0.60 mass%.

The present invention also provides a method of manufacturing the aluminum-alloy brazing sheet mentioned above, the method being featured in comprising the steps of:
casting respective aluminum alloys of the core, the brazing filler metal, and the sacrificial anode material;
hot rolling each of respective ingots of the brazing filler metal and the sacrificial anode material to a predetermined thickness;
combining the brazing filler metal onto one surface of the ingot of the core and the sacrificial anode material onto the other surface of the ingot of the core to obtain a combined material;
cladding the combined material while the combined material is hot rolled, to obtain a clad sheet;
cold rolling the clad sheet; and
annealing the clad sheet,
the aluminum alloy of the sacrificial anode material subjected to the casting step being configured to contain Si: 0.5 to 1.5 mass%, Fe: 0.5 to 1.5 mass%, Zn: 1.0 to 6.0 mass%, and Ti: 0.05 to 0.20 mass%, the balance of Al and unavoidable impurities;
the hot rolling step relative to the ingot of the sacrificial anode material being configured to start at temperature of 400 to 500 °C without performing a homogenization process;
the cladding step being configured to start at temperature of 400 to 500 °C and end at temperature of 200 to 400 °C; and
the annealing step including both or one of intermediate annealing performed midway the cold rolling step and final annealing performed after the cold rolling step;
when the intermediate annealing is performed, either a continuous annealing method at a temperature of 350 to 550 °C for a period of 0 to 1 minute or a batch annealing method at a temperature of 200 to 400 °C for a period of 1 to 8 hours is used;
when the final annealing is performed, the batch annealing method at a temperature of 200 to 400 °C for a period of 1 to 8 hours being used, and
when both of the intermediate annealing and the final annealing are performed, the batch annealing method at a temperature of 200 to 400 °C for a period of 1 to 8 hours being used.

The method of manufacturing the aluminum-alloy brazing sheet according to the present invention is further featured in that the method further comprises, subsequent to the annealing step, a cooling step of cooling the clad sheet from the annealing temperature down to 180 °C at an average cooling rate of not less than 20 °C/hour.

### ADVANTAGEOUS EFFECT OF THE INVENTION

With the present invention, the aluminum-alloy brazing sheet can exhibits good corrosion resistance in spite of having a small thickness even under alkaline corrosive environments. Since the aluminum- alloy brazing sheet according to the present invention is thin and has light-weight, good thermal conductivity and good corrosion resistance when used as a vehicular heat exchanger, the lifetime of the heat exchanger can be prolonged.

### BRIEF DESCRIPTION OF DRAWINGS

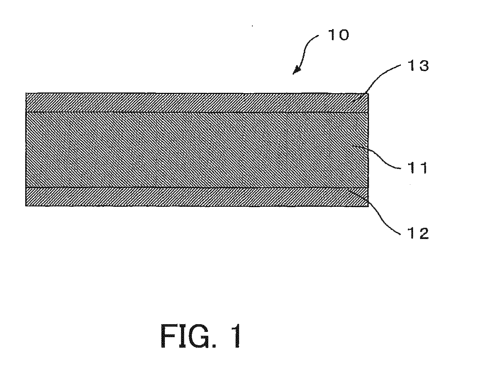

Fig. 1 is a sectional view illustrating a structure of an aluminum-alloy brazing sheet according to the present invention.

### BEST MODES FOR CARRYING OUT THE INVENTION

Embodiments of the present invention will be described below.

### 1. Aluminum-Alloy Brazing Sheet

An aluminum-alloy brazing sheet according to the present invention will be first described. The following description is made in connection with an example that the aluminum-alloy brazing sheet is used as a material of tubes for a radiator, a heater core, etc., in which cooling water is circulated.

### 1-1. Structure

As illustrated in Fig. 1, an aluminum-alloy brazing sheet 10 is composed of a three-layer clad sheet that is formed by cladding a blazing material 12 made of an Al-Si based alloy on one surface of a core 11 made of an aluminum alloy, and by cladding a sacrificial anode material 13 on the other surface of the core 11.

The brazing sheet used as a material of tubes for radiator, heater core, etc. has a small thickness of about 0.3 mm or less. The cladding rate of each of the brazing filler metal and the sacrificial anode material for the material of tubes for radiator, heater core, etc. is usually about 7 to 20 %. For example, the cladding rate of the brazing filler metal is set to 10 %, and the cladding rate of the sacrificial anode material is set to 20 %. The brazing sheet used as a material of tubes for an intercooler has a thickness of about 0.8 mm or less. The cladding rate of each of the brazing filler metal and the sacrificial anode material for the material of tubes for an intercooler is usually about 3 to 15 %. Moreover, the brazing sheet used as a plate which is joined to a tube to form a structure of the heat exchanger has a thickness of about 1.6 mm or less. The cladding rate of each of the brazing filler metal and the sacrificial anode material for the plate which is joined to a tube to form a structure of the heat exchanger is usually about 3 to 10 %.

### 1-2. Components

Hereinafter, the reasons why the following component elements are added to the sacrificial anode material 13 and the core 11 which constitute aluminum-alloy brazing sheet 10 according to the present invention will be described. The content ranges of respective component elements as well as the material properties of the brazing filler metal 12 will also be described.

### (a) Sacrificial Anode Material

Si: Si forms Al-Fe-Si, Al-Fe-Si-Mn and Al-Mn-Si based compounds together with Fe and/or Mn, Mn being contained as an impurity. Because the progress of the cathode reaction is promoted and pitting corrosion is dispersed on the surface of such a Si containing compound, Si can suppress localization of the pitting corrosion. As a result, the progress of the pitting corrosion in the depth direction can be suppressed, and the lifetime until the occurrence of piercing corrosion can be prolonged. Furthermore, when Mn contained as an impurity is dissolved in the sacrificial anode material in a solid state, the electrical potential of the sacrificial anode material becomes higher. This reduces the sacrificial anticorrosion effect, but compounds of Mn and other component elements are produced. Therefore, an amount of Mn dissolved in the sacrificial anode material in a solid state can be reduced, and consequently the reduction of the sacrificial anticorrosion effect can be suppressed. A remaining part of Si other than forming the compounds with Fe and Mn is dissolved in the sacrificial anode material in a solid state and develops the solid-solution strengthening action, whereby the strength of the sacrificial anode material can be increased.

The content of Si is 0.5 to 1.5 mass% (hereinafter simply denoted as "%"). If the content is less than 0.5 %, the above-mentioned effects would be insufficient. If the content is more than 1.5 %, the solidus temperature (melting point) of the sacrificial anode material would be lowered and melted. The preferable content of Si is 0.7 to 1.2 %.

Fe: Fe forms Al-Fe-Si, Al-Fe-Mn, and Al-Fe-Mn-Si based compounds together with Si and/or Mn, Mn being contained as an impurity. Because the progress of the cathode reaction is promoted and pitting corrosion is dispersed on the surface of such a Fe containing compound, Fe can suppress localization of the pitting corrosion. As a result, the progress of the pitting corrosion in the depth direction can be suppressed, and the lifetime until the occurrence of piercing corrosion can be prolonged. Furthermore, when Mn contained as an impurity is dissolved in the sacrificial anode material in a solid state, the electrical potential of the sacrificial anode material becomes higher. This reduces the sacrificial anticorrosion effect, but compounds of Mn and other component elements are produced. Therefore, an amount of Mn dissolved in the sacrificial anode material in a solid state can be reduced, and consequently the reduction of the sacrificial anticorrosion effect can be suppressed.

The content of Fe is 0.5 to 1.5 %. If the content is less than 0.5 %, the above-mentioned effects would be insufficient. If the content is more than 1.5 %, start points acting as cathodes would be too many and self-corrosion resistance of the sacrificial anode material would be reduced. In addition, plastic workability would be lowered due to generation of a giant intermetallic compound (hereinafter abbreviated to "G.C."). The preferable content of Fe is 0.7 to 1.2 %.

Zn: Zn can make the electrical potential of the sacrificial anode material lower and can increase the corrosion resistance with the sacrificial anticorrosion effect by producing a potential difference relative to the core. The content of Zn is 1.0 to 6.0 %. If the content is less than 1.0 %, the above-mentioned effect would be insufficient. If the content is more than 6.0 %, a corrosion rate would be increased and the sacrificial anode material would be lost in an earlier stage, thus resulting in reduction of the corrosion resistance. The preferable content of Zn is 2.0 to 5.0 %.

Ti: Ti increases the strength and the corrosion resistance of the sacrificial anode material with the solid-solution strengthening action. The content of Ti is 0.05 to 0.20 %. If the content is less than 0.05 %, the effects of increasing the strength and the corrosion resistance would not be obtained. If the content is more than 0.20 %, a giant intermetallic compound would be more apt to be formed and plastic workability would be reduced. The preferable content of Ti is 0.08 to 0.18 %.

Mn: Mn makes the electrical potential of the sacrificial anode material higher and reduces the corrosion resistance. For this reason, Mn is not intentionally added to the sacrificial anode material and it is contained therein just as an unavoidable impurity. The content of Mn as the unavoidable impurity is preferably not more than 0.1 %.

### (b) Core

Si: Si forms Al-Fe-Si, Al-Mn-Si and Al-Fe-Mn-Si based compounds in the core together with Fe and/or Mn to exert the dispersion strengthening action, and dissolves in a matrix in a solid state to exert the solid-solution strengthening action and increase the strength of the core. Moreover, Si further increases the strength of the core by reacting with Mg and forming a Mg₂Si compound.

The preferable content of Si is 0.5 to 1.2 %. If the content is less than 0.5 %, the above-mentioned effects would be obtained in some cases. If the content is more than 1.2 %, the melting point of the core would be lowered and the core would be melted in some cases. The more preferable content of Si is 0.5 to 1.0 %.

Fe: Fe tends to form an intermetallic compound having such a size as serving as a recrystallization nucleus. In order to make coarser the crystal grain size after the brazing and suppress diffusion of a brazing alloy, the content of Fe is preferably 0.05 to 0.60 %. If the content is less than 0.05 %, a high-purity aluminum ground metal would have to be used and the cost would be increased. On the other hand, if the content is more than 0.60 %, the crystal grain size after the brazing would become fine, so that diffusion of the brazing alloy may be caused. The more preferable content of Fe is 0.10 to 0.30 %.

Cu: Cu increases the strength of the core with the solid-solution strengthening action and further makes the electrical potential of the core higher to increase a potential difference relative to the sacrificial anode material and a fin material, thereby improving the anticorrosion effect with the sacrificial anode effect. The preferable content of Cu is 0.3 to 1.0 %. If the content is less than 0.3 %, the above-mentioned effects would be insufficiently obtained in some cases. If the content is more than 1.0 %, the melting point of the core would be lowered and the core would be melted, which may cause intergranular corrosion. The more preferable content of Cu is 0.4 to 0.8 %.

Mn: Mn is effective in not only improving the strength of the core, the brazing properties, and the corrosion resistance, but only making the electrical potential of the core higher. The preferable content of Mn is 0.5 to 1.6 %. If the content is less than 0.5 %, the above-mentioned effects would be insufficiently attained. On the other hand, if the content is more than 1.6 %, a giant intermetallic compound would be more apt to be formed during casting, so that plastic workability may be reduced. The more preferable content of Mn is 1.0 to 1.5 %.

Ti: Ti increases the strength of the core with the solid-solution strengthening action and further increases the corrosion resistance. The preferable content of Ti is 0.05 to 0.20 % or less. If the content is less than 0.05 %, the above-mentioned effects would not be obtained in some cases. If the content is more than 0.20 %, a giant intermetallic compound would be more apt to be formed, so that plastic workability may be reduced. The preferable content of Ti is 0.08 to 0.18 %.

Mg: The core used in the present invention may further contain a predetermined amount of Mg. Mg exhibits an effect of increasing the strength of the core with precipitation of Mg₂Si. The preferable content of Mg is 0.05 to 0.60 %. If the content is less than 0.05 %, the above-mentioned effect would be insufficiently obtained. If the content is more than 0.60 %, the brazing properties would be reduced in some cases. The more preferable content of Mg is 0.05 to 0.40 %.

### (c) Brazing filler metal

As the brazing filler metal in the present invention, brazing filler metals made of Al-Si based alloys, which are used in ordinary brazing, can be used and the type of the brazing filler metal is not limited to particular one. For example, alloys (Al - 7 to 13 % Si) in conformity with JIS4343, 4045, and 4047 are preferably used.

### 1-3. Characteristics of Sacrificial Anode Material

Next, the Vickers hardness of the sacrificial anode material after heating in the same way as the brazing of the brazing sheet will be described. The types of compounds in the sacrificial anode material will also be described. In the present invention, the term "heating in the same way as the brazing" implies heating at 580 to 610 °C with a holding time of 1 to 5 minutes.

### (a) Vickers Hardness

The Vickers hardness of the sacrificial anode material after carrying out the heating in the same way as the brazing is to be not less than 30 Hv. The inventor has found that when cooling water flows within a tube at a fast speed, erosion corrosion may occur, but consumption of the sacrificial anode material due to the erosion corrosion can be suppressed by setting the strength (hardness) of the sacrificial anode material to be not less than a certain level. If the Vickers hardness of the sacrificial anode material after heating conducted in the same way as the brazing is less than 30 Hv, the consumption suppression effect would be insufficient. The Vickers hardness is preferably not less than 33 Hv.

### (b) Compounds in Sacrificial Anode Material

Compounds contained in the sacrificial anode material are formed by Al, Fe and Si. An electrical potential specific to each of the compounds is determined depending on the types of elements forming the compound. If a difference between the potential of the compound and the potential of a matrix of the sacrificial anode material is too large, the cathode reaction around the compound would be too active and the corrosion reaction would be excessively progressed, thus resulting in reduction of the self-corrosion resistance of the sacrificial anode material. When the formed compound is a Si or Al-Ni based compound, a potential difference between such a compound and the sacrificial anode material is too large and the self-corrosion resistance is inferior.

### 2. Method of Manufacturing Aluminum-Alloy Brazing Sheet

A method of manufacturing the aluminum-alloy brazing sheet according to the present invention will be described below. The aluminum-alloy brazing sheet according to the present invention is manufactured by cladding an Al-Si based brazing filler metal on one surface of the core, and by cladding the sacrificial anode material which is made of the alloy having composition described above in 1-2. (a), on the other surface of the core, the core being formed in a sheet-like shape using the alloy having the composition described above in 1-2. (b).

Respective aluminum alloys having the above-desired component compositions suitable for the core, the sacrificial anode material, and the brazing filler metal are individually melted and cast into ingots. Melting and casting methods are not limited to particular ones, and they can be practiced using ordinary methods.

### 2-1. Homogenization Process Step

The cast ingots are then subjected to a homogenization process, as required. On the ingot of the core, the homogenization process is not performed, or when necessary, the homogenization process is performed at temperature of not higher than 550 °C and more preferably not higher than 530 °C. If the homogenization process is performed at temperature of higher than 550 °C, Mn-based compounds present in the core would grow. Because the grown sized compounds turn to recrystallization nucleus during the brazing, crystal grains of the core after the brazing become finer. This is apt to result in an adverse phenomenon such as diffusion of the brazing alloy that the brazing alloy infiltrates and erodes the crystal grain boundary of the core. It is to be noted that the homogenization process is not performed on the brazing filler metal.

The homogenization process is not performed also on the sacrificial anode material for the following reason. If the homogenization process is performed on the sacrificial anode material, Al-Fe-Mn, Al-Fe-Mn-Si, and Al-Mn-Si based compounds present in the sacrificial anode material would be grown. Those grown compounds should be present in a state not dissolved in the Al matrix even during the brazing. As a result, the amount of Si forming a solid solution in the sacrificial anode material after the brazing would be reduced whereby the strength of the sacrificial anode material is lowered.

### 2-2. Hot-Rolling Step of Sacrificial Anode Material

The sacrificial anode material which is not subjected to the homogenization process is hot rolled to a desired thickness after machining the material surfaces. The hot rolling of the sacrificial anode material is started at temperature of 400 to 500 °C. If the start temperature of the hot rolling is lower than 400 °C, deformation resistance during the hot rolling would be increased and the hot rolling would be difficult to carry out. If the start temperature of the hot rolling is higher than 500 °C, Si added to the sacrificial anode material would be precipitated and further grow in size. Those grown sized precipitates cannot form a solid solution again during the brazing, thereby reducing the amount of Si which forms a solid solution in the sacrificial anode material after the brazing. As a result, the strength of the sacrificial anode material degrade. The preferable start temperature of the hot rolling of the sacrificial anode material is 420 to 480 °C.

The end temperature of the hot rolling of the sacrificial anode material is not specified to a particular value. The sacrificial anode material having been rolled to the desired thickness is held in a sheet state without being wound to a coiled shape. Therefore, the sacrificial anode material after the hot rolling tends to more quickly cool than in the case of being wound into the coiled shape. This avoids the precipitates from growing. Therefore, in a cladding step relative to a combined material obtained by combining the sacrificial anode material and the brazing filler metal with the core, the objective metal texture can be obtained when the start temperature of the cladding step is within the range defined in the present invention.

### 2-3. Cladding Step Relative To Combined Material

The core and the brazing filler metal are also subjected to machining of the surfaces thereof. The sacrificial anode material and the brazing filler metal which were subjected to the hot rolling after machining the surface thereof are combined with one and the other surfaces of the core the surface of which was machined, respectively, to obtain a combined material. A clad sheet is then fabricated by hot rolling the combined material at the start temperature of 400 to 500 °C and the end temperature of 200 to 400 °C to thereby clad the combined material.

If the start temperature of the cladding of the combined material is lower than 400 °C, deformation resistance during the cladding step would be increased and the cladding would be difficult to carry out. Moreover, it would become difficult to fix the cladding materials, i.e., the sacrificial anode material and the brazing filler metal with the core together by applying pressure. On the other hand, if the start temperature of the cladding is higher than 500 °C, Si added to the sacrificial anode material would be precipitated and grow in size. Those grown precipitates cannot form a solid solution again during the brazing, thus reducing the amount of Si forming a solid solution in the sacrificial anode material after the brazing. As a result, the strength of the sacrificial anode material degrades. The preferable start temperature of the cladding is 420 to 480 °C.

Furthermore, by keeping the end temperature of the cladding of the combined material at 200 to 400 °C, precipitation of Si in the sacrificial anode material can be suppressed after the clad sheet has been wound into the coiled shape. If the end temperature of the cladding is lower than 200 °C, a problem would arise in that rolling oil used during the cladding is burned. If the end temperature of the cladding is higher than 400 °C, Si in the sacrificial anode material would be precipitated after the clad sheet has been wound into the coiled shape, and the proper strength would not be obtained after the brazing. The preferable end temperature of the cladding is 230 to 350 °C.

### 2-4. Cold Rolling Step of Clad sheet

The clad sheet obtained by the cladding step is subjected to cold rolling. Conditions of the cold rolling are not limited to particular ones, and suitable one of ordinary methods can be used. As one example of the conditions, a final rolling rate in the case of intermediate annealing is set to 10 to 50 %.

### 2-5. Annealing Step of Clad sheet

The clad sheet is annealed midway the cold rolling step (intermediate annealing), or annealed after the cold rolling step. The annealing is performed one or more times either midway the cold rolling step or after the cold rolling step. Alternatively, the annealing may be performed one or more times in each of both stages, namely, midway the cold rolling step and after the cold rolling step. For the intermediate annealing, either a continuous annealing method or a batch annealing method is used. For the final annealing, the batch annealing method is used. When the annealing step includes both of the intermediate annealing and the final annealing, the batch annealing method is used. A batch annealing furnace can be used for the batch annealing method, and a continuous annealing line (CAL) can be used for the continuous annealing method. The annealing temperature in the batch annealing method is 200 to 400 °C. If the annealing temperature is lower than 200 °C, the strength before the brazing would be increased, so that formability of the clad sheet would be reduced. On the other hand, if the annealing temperature is higher than 400 °C, Si in the sacrificial anode material would be precipitated, and the proper strength would not be obtained after the brazing. The preferable annealing temperature in the batch annealing furnace is 250 to 400 °C. In addition, the annealing holding time in the batch annealing furnace is 1 to 8 hours.

When the CAL is used, quicker temperature rising and quicker temperature cooling can be performed in comparison with the case using the batch annealing furnace, and hence Si in the sacrificial anode material is hardly precipitated even when the annealing temperature is set to a higher value. Accordingly, when the annealing is performed using the CAL, the annealing temperature can be set to a range of 350 to 550 °C. If the annealing temperature is lower than 350 °C, the strength before the brazing would be increased, so that formability of the clad sheet would be reduced. On the other hand, if the annealing temperature is higher than 550 °C, a possibility would arise in that, when passing through the CAL, the sheet is twisted due to high temperature and is damaged upon striking against the equipment. The more preferable annealing temperature in the annealing using the CAL is 400 to 500 °C. In addition, the annealing holding time in the annealing using the CAL is 0 to 1 minute. Here, "the annealing holding time of 0 minute" implies that, after reaching the annealing temperature, cooling is started at once without holding time.

As described above, the annealing may be performed on the timing before the thickness of the clad sheet reaches the final sheet thickness as the intermediate annealing or on the timing after the thickness of the clad sheet reached the final sheet thickness as the final annealing. Thus, the refining of the clad sheet may be performed in any type of H1n, H2n and O.

### 2-6. Cooling Step of Clad sheet

The clad sheet after the annealing is subjected to a cooling step. An average cooling rate in the cooling step from the annealing temperature to 180 °C is preferably set to be not less than 20 °C/hour. By setting the average cooling rate in the cooling step after the annealing to a larger value, Si forming a solid solution in the sacrificial anode material is suppressed from precipitating during the cooling. Accordingly, the mount of Si forming a solid solution can be maintained large, and the proper strength can be obtained after the brazing. If the average cooling rate is less than 20 °C/hour, Si forming a solid solution in the sacrificial anode material would be precipitated and the mount of Si forming a solid solution would be reduced, thus degrading the strength. The more preferable average cooling rate in the cooling step from the annealing temperature to 180 °C is not less than 25 °C/hour. The reason why the average cooling rate is specified in the range from the annealing temperature to 180 °C resides in that, in a temperature range lower than 180 °C, precipitation of elements, such as Si, hardly occurs and specifying the average cooling rate is almost meaningless.

As described above, the aluminum-alloy brazing sheet according to the present invention exhibits good corrosion resistance even when formed in a thin plate. Thus, according to the present invention, the aluminum-alloy brazing sheet can be obtained which is suitably used as, particularly, a fluid channel constituting member for a heat exchanger for vehicles.

### Examples

Examples of the aluminum-alloy brazing sheet according to the present invention will be described in detail below, but the present invention is not limited to the following Examples.

First, core alloys having alloy compositions listed in Table 1 and sacrificial anode material alloys having alloy compositions listed in Table 2 were cast by metal mold casting, and respective ingots were obtained after facing both surfaces of each ingot. In the alloy compositions listed in Tables 1 and 2, a symbol "-" indicates that the content is not more than a detection limit, and "balance" includes unavoidable impurities. An alloy in conformity with JIS4045 was used as the brazing filler metal, and the brazing filler metal in the form of a sheet was fabricated by rolling such an alloy to the desired thickness by hot rolling at 500 °C.

**Table 1**

| Alloy Symbol | Alloy Composition (mass%) | | | | | | | |
|---|---|---|---|---|---|---|---|---|
| | Si | Fe | Cu | Mn | Mg | Zn | Ti | Al |
| A1 | 0.7 | 0.20 | 0.5 | 1.1 | - | - | 0.12 | balance |
| A2 | 0.5 | 0.20 | 0.5 | 1.1 | - | - | 0.12 | balance |
| A3 | 1.2 | 0.20 | 0.5 | 1.1 | - | - | 0.12 | balance |
| A4 | 0.8 | 0.05 | 0.5 | 1.1 | - | - | 0.12 | balance |
| A5 | 0.8 | 0.60 | 0.5 | 1.1 | - | - | 0.12 | balance |
| A6 | 0.8 | 0.20 | 0.3 | 1.1 | - | - | 0.12 | balance |
| A7 | 0.8 | 0.20 | 1.0 | 1.1 | - | - | 0.12 | balance |
| A8 | 0.8 | 0.20 | 0.5 | 0.5 | - | - | 0.12 | balance |
| A9 | 0.8 | 0.20 | 0.5 | 1.6 | - | - | 0.12 | balance |
| A10 | 0.8 | 0.20 | 0.5 | 1.1 | - | - | 0.05 | balance |
| A11 | 0.8 | 0.20 | 0.5 | 1.1 | - | - | 0.20 | balance |
| A12 | 0.8 | 0.20 | 0.5 | 1.1 | 0.05 | - | 0.12 | balance |
| A13 | 0.8 | 0.20 | 0.5 | 1.1 | 0.60 | - | 0.12 | balance |
| A14 | 0.3 | 0.20 | 0.5 | 1.1 | - | - | 0.12 | balance |
| A15 | 1.5 | 0.20 | 0.5 | 1.1 | - | - | 0.12 | balance |
| A16 | 0.8 | 0.70 | 0.5 | 1.1 | - | - | 0.12 | balance |
| A17 | 0.8 | 0.20 | 0.2 | 1.1 | - | - | 0.12 | balance |
| A18 | 0.8 | 0.20 | 1.2 | 1.1 | - | - | 0.12 | balance |
| A19 | 0.8 | 0.20 | 0.5 | 0.3 | - | - | 0.12 | balance |
| A20 | 0.8 | 0.20 | 0.5 | 1.8 | - | - | 0.12 | balance |
| A21 | 0.8 | 0.20 | 0.5 | 1.1 | - | - | 0.03 | balance |
| A22 | 0.8 | 0.20 | 0.5 | 1.1 | - | - | 0.24 | balance |
| A23 | 0.8 | 0.20 | 0.5 | 1.1 | 0.80 | - | 0.12 | balance |

**Table 2**

| Alloy symbol | Alloy Composition (mass%) | | | | | | | |
|---|---|---|---|---|---|---|---|---|
| | Si | Fe | Cu | Mn | Mq | Zn | Ti | Al |
| B1 | 1.0 | 1.0 | - | - | - | 3.0 | 0.12 | balance |
| B2 | 0.5 | 1.0 | - | - | - | 3.0 | 0.12 | balance |
| B3 | 1.5 | 1.0 | - | - | - | 3.0 | 0.12 | balance |
| B4 | 1.0 | 0.5 | - | - | - | 3.0 | 0.12 | balance |
| B5 | 1.0 | 1.5 | - | - | - | 3.0 | 0.12 | balance |
| B6 | 1.0 | 1.0 | - | - | - | 1.0 | 0.12 | balance |
| B7 | 1.0 | 1.0 | - | - | - | 6.0 | 0.12 | balance |
| B8 | 1.0 | 1.0 | - | - | - | 3.0 | 0.05 | balance |
| B9 | 1.0 | 1.0 | - | - | - | 3.0 | 0.20 | balance |
| B10 | 1.5 | 0.5 | - | - | - | 3.0 | 0.20 | balance |
| B11 | 0.3 | 1.0 | - | - | - | 3.0 | 0.12 | balance |
| B12 | 1.7 | 1.0 | - | - | - | 3.0 | 0.12 | balance |
| B13 | 1.0 | 0.3 | - | - | - | 3.0 | 0.12 | balance |
| B14 | 1.0 | 1.7 | - | - | - | 3.0 | 0.12 | balance |
| B15 | 1.0 | 1.0 | - | - | - | 0.8 | 0.12 | balance |
| B16 | 1.0 | 1.0 | - | - | - | 7.0 | 0.12 | balance |
| B17 | 1.0 | 1.0 | - | - | - | 3.0 | 0.03 | balance |
| B18 | 1.0 | 1.0 | - | - | - | 3.0 | 0.24 | balance |
| | | | | | | | | |

Next, the cores and the sacrificial anode materials were subjected or not subjected to the homogenization process as listed in Tables 3 and 4. The sacrificial anode materials were further subjected to the hot rolling step at the start temperatures listed in Tables 3 and 4. Using the cores and the sacrificial anode materials thus obtained and the above-mentioned brazing filler metal, combined materials were fabricated by combining the brazing filler metal onto a surface of each core, on the side opposite to the sacrificial anode material, in the combined materials including the cores and the sacrificial anode materials which were provided in various combinations listed in Tables 5 to 8. Those combined materials were subjected to the hot cladding rolling step at the start temperature and the end temperature listed in Tables 3 and 4. Respective cladding rates of the brazing filler metal and the sacrificial anode material were 10 % for the brazing filler metal and 12 % for the sacrificial anode material.

**Table 3**

| Manufacturing Process No. | Homogenization Process | | Start Temperature of Hot Rolling | Start Temperature of Hot Rolling | End Temperature of Hot Rolling | Intermediate Annealing | Final Annealing | Cooling Rate after Annealing |
|---|---|---|---|---|---|---|---|---|
| | Core | Sacrificial Anode Material | Sacrificial Anode Material | Combined Material | Combined Material | | | |
| 1 | none | none | 480°C | 480°C | 300°C | 260°C×2h*¹⁾ | none | 30°C/h |
| 2 | none | none | 400°C | 480°C | 300°C | 260°C×2h*¹⁾ | none | 30°C/h |
| 3 | none | none | 500°C | 480°C | 300°C | 260°C×2h*¹⁾ | none | 30°C/h |
| 4 | none | none | 480°C | 400°C | 300°C | 260°C×2h*¹⁾ | none | 30°C/h |
| 5 | none | none | 480°C | 500°C | 300°C | 260°C×2h*¹⁾ | none | 30°C/h |
| 6 | none | none | 480°C | 480°C | 200°C | 260°C×2h*¹⁾ | none | 30°C/h |
| 7 | none | none | 480°C | 480°C | 400°C | 260°C×2h*¹⁾ | none | 30°C/h |
| 8 | none | 600°C×3h | 480°C | 480°C | 300°C | none | 260°C×2h*¹⁾ | 30°C/h |
| 9 | none | none | 350°C | 480°C | 300°C | none | 260°C×2h*¹⁾ | 30°C/h |
| 10 | none | none | 550°C | 480°C | 300°C | none | 260°C×2h*¹⁾ | 30°C/h |
| 11 | none | none | 480°C | 350°C | 300°C | none | 260°C×2h*¹⁾ | 30°C/h |
| 12 | none | none | 480°C | 550°C | 300°C | none | 260°C×2h*¹⁾ | 30°C/h |
| 13 | none | none | 480°C | 480°C | 180°C | none | 260°C×2h*¹⁾ | 30°C/h |
| 14 | none | none | 480°C | 480°C | 420°C | none | 260°C×2h*¹⁾ | 30°C/h |
| 15 | none | none | 480°C | 480°C | 300°C | 370°C×2h*¹⁾ | none | 30°C/h |
| 16 | none | none | 480°C | 480°C | 300°C | 370°C×2h*¹⁾ | 260°C×2h^{*1)} | 30°C/h |

| | | | | | | | | |
|---|---|---|---|---|---|---|---|---|
| *¹⁾ batch annealing method | | | | | | | | |

**Table 4**

| Manufactoring Process No. | Homogenization Process | | Start Temperature of Hot Rolling | Start Temperature of Hot Rolling | End Temperature of Hot Rolling | Intermediate Annealing | Final Annealing | Cooling Rate after Annealing |
|---|---|---|---|---|---|---|---|---|
| | Core | Sacrificial Anode Material | Sacrificial Anode Material | Combined Material | Combined Material | | | |
| 17 | none | none | 480°C | 480°C | 300°C | 350°C×60s*²⁾ | none | 15000°C/h |
| 18 | none | none | 480°C | 480°C | 300°C | 480°C×10s*²⁾ | none | 15000°C/h |
| 19 | none | none | 480°C | 480°C | 300°C | 550°C×0s*²⁾ | none | 15000°C/h |
| 20 | none | none | 480°C | 480°C | 300°C | 300°C×10s*²⁾ | none | 15000°C/h |
| 21 | none | none | 480°C | 480°C | 300°C | 580°C×10s*²⁾ | none | 15000°C/h |
| 22 | none | none | 500°C | 480°C | 300°C | none | 260°C×2h*¹⁾ | 15°C/h |
| 23 | none | none | 500°C | 480°C | 300°C | none | 260°C×2h*¹⁾ | 20°C/h |
| 24 | none | none | 480°C | 480°C | 300°C | none | 260°C×2h*¹⁾ | 25°C/h |
| 25 | none | none | 480°C | 480°C | 300°C | none | 260°C×2h*¹⁾ | 40°C/h |
| 26 | none | none | 480°C | 480°C | 300°C | none | 260°C×2h*¹⁾ | 50°C/b |
| 27 | 530°C×3h | none | 480°C | 480°C | 300°C | none | 260°C×2h*¹⁾ | 30°C/h |
| 28 | 550°C×3h | none | 480°C | 480°C | 300°C | none | 260°C×2h*¹⁾ | 30°C/h |
| 29 | 600°C×3h | none | 480°C | 480°C | 300°C | none | 260°C×2h*¹⁾ | 15°C/h |
| 30 | none | none | 480°C | 480°C | 300°C | 200°C×2h*¹⁾ | none | 30°C/h |
| 31 | none | none | 480°C | 480°C | 300°C | none | 400°C×2h*¹⁾ | 30°C/h |
| 32 | none | none | 480°C | 480°C | 300°C | none | 450°C×2h*¹⁾ | 30°C/h |
| 33 | none | none | 480°C | 480°C | 300°C | none | 260°C×1h*¹⁾ | 30°C/h |
| 34 | none | none | 480°C | 480°C | 300°C | none | 260°C×8h*¹⁾ | 30°C/h |

| | | | | | | | | |
|---|---|---|---|---|---|---|---|---|
| *¹⁾ batch annealing method *²⁾ continuous annealing method | | | | | | | | |

**Table 5**

| | | Alloy Symbol | | Manufac-turing Step No. in Table 3 | Strength after Brazing | | Fin Joint Rate | | Erosion Resistance and Melting Resistance | | | Wickers Hardness of Sacrificial Anode Material | Corrosion Resistance on Cooling Water Side | Remarks |
|---|---|---|---|---|---|---|---|---|---|---|---|---|---|---|
| | | Core | Sacrificial Anode Material | | Tensile Strength (N/mm²) | Rating | Joint Rate (%) | Rating | Occurrence of Erosion | Occurrence of Material Melting | Rating | | | |
| | 1 | A1 | B1 | 1 | 149 | ○ | 100 | ○ | no | no | ○ | 33 | ○ | |
| | 2 | A1 | B2 | 1 | 147 | ○ | 100 | ○ | no | no | ○ | 30 | ○ | |
| | 3 | A1 | B3 | 1 | 150 | ○ | 100 | ○ | no | no | ○ | 40 | ○ | |
| | 4 | A1 | B4 | 1 | 149 | ○ | 100 | ○ | no | no | ○ | 33 | ○ | |
| | 5 | A1 | B5 | 1 | 148 | ○ | 100 | ○ | no | no | ○ | 36 | ○ | |
| | 6 | A1 | B6 | 1 | 148 | ○ | 100 | ○ | no | no | ○ | 33 | ○ | |
| | 7 | A1 | B7 | 1 | 148 | ○ | 100 | ○ | no | no | ○ | 33 | ○ | |
| | 8 | A1 | B8 | 1 | 148 | ○ | 100 | ○ | no | no | ○ | 33 | ○ | |
| | 9 | A1 | B9 | 1 | 150 | ○ | 100 | ○ | no | no | ○ | 34 | ○ | |
| | 10 | A1 | B10 | 1 | 152 | ○ | 100 | ○ | no | no | ○ | 45 | ○ | |
| (a) | 11 | A2 | B1 | 1 | 140 | ○ | 100 | ○ | no | no | ○ | 33 | ○ | |
| | 12 | A3 | B1 | 1 | 153 | ○ | 100 | ○ | no | no | ○ | 33 | ○ | |
| | 13 | A4 | B1 | 1 | 149 | ○ | 100 | ○ | no | no | ○ | 33 | ○ | |
| | 14 | A5 | B1 | 1 | 143 | ○ | 100 | ○ | no | no | ○ | 33 | ○ | |
| | 15 | A6 | B1 | 1 | 141 | ○ | 100 | ○ | no | no | ○ | 33 | ○ | |
| | 16 | A7 | B1 | 1 | 163 | ○ | 100 | ○ | no | no | ○ | 33 | ○ | |
| | 17 | A8 | B1 | 1 | 142 | ○ | 100 | ○ | no | no | ○ | 33 | ○ | |
| | 18 | A9 | B1 | 1 | 153 | ○ | 100 | ○ | no | no | ○ | 33 | ○ | |
| | 19 | A10 | B1 | 1 | 147 | ○ | 100 | ○ | no | no | ○ | 33 | ○ | |
| | 20 | A11 | B1 | 1 | 150 | ○ | 100 | ○ | no | no | ○ | 33 | ○ | |
| | 21 | A12 | B1 | 1 | 158 | ○ | 100 | ○ | no | no | ○ | 33 | ○ | |
| | 22 | A13 | B1 | 1 | 209 | ○ | 96 | ○ | no | no | ○ | 33 | ○ | |

| | | | | | | | | | | | | | | |
|---|---|---|---|---|---|---|---|---|---|---|---|---|---|---|
| (a) Inventive Example | | | | | | | | | | | | | | |

**Table 6**

| | | Alloy Symbol | | Manufacturing Step No. in Table 3 | Strength after Brazing | | Fin Joint Rate | | Erosion Resistance and Melting Resistance | | | Vickers Hardness of Sacrificial Anode Material | Corrosion Resistance on Cooling Water Side | Remarks |
|---|---|---|---|---|---|---|---|---|---|---|---|---|---|---|
| | | Core | Sacrificial Anode Material | | Tensile Strength (N/mm²) | Rating | Joint Rate (%) | Rating | Occurrence of Erosion | Occurrence of Material Melting | Rating | | | |
| (b) | 23 | A14 | B15 | 1 | 139 | × | 100 | ○ | no | no | ○ | 33 | × | |
| | 24 | A15 | B15 | 1 | 155 | ○ | 100 | ○ | no | occurred | × | 33 | × | |
| | 25 | A16 | B15 | 1 | 141 | ○ | 100 | ○ | occurred | no | × | 33 | × | |
| | 26 | A17 | B15 | 1 | 136 | × | 100 | ○ | no | no | ○ | 33 | × | |
| | 27 | A18 | B15 | 1 | 168 | ○ | 100 | ○ | no | occurred | × | 33 | × | |
| | 28 | A19 | B15 | 1 | 139 | × | 100 | ○ | no | no | ○ | 33 | × | |
| | 29 | A20 | B15 | 1 | 155 | ○ | 100 | ○ | no | no | ○ | 33 | × | (c) |
| | 30 | A21 | B15 | 1 | 145 | ○ | 100 | ○ | no | no | ○ | 33 | × | |
| | 31 | A22 | B15 | 1 | 152 | ○ | 100 | ○ | no | no | ○ | 33 | × | (c) |
| | 32 | A23 | B15 | 1 | 220 | ○ | 72 | × | no | no | ○ | 33 | × | |
| | 33 | A1 | B11 | 1 | 146 | ○ | 100 | ○ | no | no | ○ | 28 | × | |
| | 34 | A1 | B12 | 1 | 150 | ○ | 100 | ○ | no | occurred | × | 43 | × | |
| | 35 | A1 | B13 | 1 | 147 | ○ | 100 | ○ | no | no | ○ | 32 | × | |
| | 36 | A1 | B14 | 1 | 149 | ○ | 100 | ○ | no | no | ○ | 36 | × | (c) |
| | 37 | A1 | B15 | 1 | 149 | ○ | 100 | ○ | no | no | ○ | 33 | × | |
| | 38 | A1 | B16 | 1 | 149 | ○ | 100 | ○ | no | no | ○ | 33 | × | |
| | 39 | A1 | B17 | 1 | 147 | ○ | 100 | ○ | no | no | ○ | 33 | × | |
| | 40 | A1 | B18 | 1 | 150 | ○ | 100 | ○ | no | no | ○ | 34 | × | (c) |

| | | | | | | | | | | | | | | |
|---|---|---|---|---|---|---|---|---|---|---|---|---|---|---|
| (b) Comparative Example (c) generation of G.C. | | | | | | | | | | | | | | |

**Table 7**

| | | Alloy Symbol | | Manufacturing Step No. in Table 3 | Strength after Brazing | | Fin Joint Rate | | Erosion Resistance and Melting Resistance | | | Vickers Hardness of Sacrificial Anode Material | Corrosion Resistance on Cooling Water Side | Remarks |
|---|---|---|---|---|---|---|---|---|---|---|---|---|---|---|
| | | Core | Sacrificial Anode Material | | Tensile Strength (N/mm²) | Rating | Joint Rate (%) | Rating | Occurrence of Erosion | Occurrence of Material Melting | Rating | | | |
| (a) | 41 | A1 | B1 | 2 | 149 | ○ | 100 | ○ | no | no | ○ | 35 | ○ | |
| | 42 | A1 | B1 | 3 | 149 | ○ | 100 | ○ | no | no | ○ | 31 | ○ | |
| | 43 | A1 | B1 | 4 | 153 | ○ | 100 | ○ | no | no | ○ | 35 | ○ | |
| | 44 | A1 | B1 | 5 | 145 | ○ | 100 | ○ | no | no | ○ | 30 | ○ | |
| | 45 | A1 | B1 | 6 | 150 | ○ | 100 | ○ | no | no | ○ | 33 | ○ | |
| | 46 | A1 | B1 | 7 | 146 | ○ | 100 | ○ | no | no | ○ | 31 | ○ | |
| (b) | 47 | A1 | B1 | 8 | 148 | ○ | 100 | ○ | no | no | ○ | 27 | × | |
| | 48 | A1 | B1 | 9 | - | - | - | - | - | - | - | - | - | (c) |
| | 49 | A1 | B1 | 10 | 148 | ○ | 100 | ○ | no | no | ○ | 28 | × | |
| | 50 | A1 | B1 | 11 | - | - | - | - | - | - | - | - | - | (d) |
| | 51 | A1 | B1 | 12 | 142 | ○ | 100 | ○ | no | no | ○ | 27 | × | |
| | 52 | A1 | B1 | 13 | - | - | - | - | - | - | - | - | - | (c) |
| | 53 | A1 | B1 | 14 | 146 | ○ | 100 | ○ | no | no | ○ | 29 | × | |
| (a) | 54 | A1 | B1 | 15 | 146 | ○ | 100 | ○ | no | no | ○ | 32 | ○ | |
| | 55 | A1 | B1 | 16 | 146 | ○ | 100 | ○ | no | no | ○ | 31 | ○ | |
| | 56 | A1 | B1 | 17 | 147 | ○ | 100 | ○ | no | no | ○ | 35 | ○ | |
| | 57 | A1 | B1 | 18 | 148 | ○ | 100 | ○ | no | no | ○ | 34 | ○ | |
| | 58 | A1 | B1 | 19 | 144 | ○ | 100 | ○ | no | no | ○ | 34 | ○ | |

| | | | | | | | | | | | | | | |
|---|---|---|---|---|---|---|---|---|---|---|---|---|---|---|
| (a) Inventive Example (b) Comparative Example (c) large edge chipping (d) failure in press-bonding | | | | | | | | | | | | | | |

**[Table 8]**

| | | Alloy Symbol | | Manufacturing Step No. in Table 3 | Strength after Brazing | | Fin Joint Rate | | Erosion Resistance and Melting Resistance | | | Vickers Hardness of Sacrificial Anode Material | Corrosion Resistance on Cooling Water Side | Remarks |
|---|---|---|---|---|---|---|---|---|---|---|---|---|---|---|
| | | Core | Sacrificial Anode Material | | Tensile Strength (N/mm²) | Rating | Joint Rate (%) | Rating | Occurrence of Erosion | Occurrence of Material Melting | Rating | | | |
| (a) | 59 | A1 | B1 | 20 | 150 | ○ | 100 | ○ | occurred | no | × | 35 | ○ | |
| (b) | 60 | A1 | B1 | 21 | - | - | - | - | - | - | - | - | - | (c) |
| | 61 | A1 | B1 | 22 | 148 | ○ | 100 | ○ | no | no | ○ | 28 | × | |
| (a) | 62 | A1 | B1 | 23 | 147 | ○ | 100 | ○ | no | no | ○ | 31 | ○ | |
| | 63 | A1 | B1 | 24 | 150 | ○ | 100 | ○ | no | no | ○ | 35 | ○ | |
| | 64 | A1 | B1 | 25 | 150 | ○ | 100 | ○ | no | no | ○ | 35 | ○ | |
| | 65 | A1 | B1 | 26 | 151 | ○ | 100 | ○ | no | no | ○ | 36 | ○ | |
| | 66 | A1 | B1 | 27 | 146 | ○ | 100 | ○ | no | no | ○ | 33 | ○ | |
| | 67 | A1 | B1 | 28 | 144 | ○ | 100 | ○ | no | no | ○ | 33 | ○ | |
| (b) | 68 | A1 | B1 | 29 | 138 | × | 100 | ○ | yes | no | × | 27 | × | |
| (a) | 69 | A1 | B1 | 30 | 150 | ○ | 100 | ○ | no | no | ○ | 32 | ○ | |
| | 70 | A1 | B1 | 31 | 147 | ○ | 100 | ○ | no | no | ○ | 30 | ○ | |
| (b) | 71 | A1 | B1 | 32 | 149 | ○ | 100 | ○ | no | no | ○ | 28 | × | |
| (a) | 72 | A1 | B1 | 33 | 149 | ○ | 100 | ○ | no | no | ○ | 33 | ○ | |
| | 73 | A1 | B1 | 34 | 148 | ○ | 100 | ○ | no | no | ○ | 32 | ○ | |

| | | | | | | | | | | | | | | |
|---|---|---|---|---|---|---|---|---|---|---|---|---|---|---|
| (a) Inventive Example (b) Comparative Example (c) sheet twisting | | | | | | | | | | | | | | |

Next, the clad sheets having been hot-rolled to a thickness of 3.5 mm through the hot cladding rolling were subjected to cold rolling and further subjected to the intermediate annealing and/or the final annealing under conditions listed in Tables 3 and 4, whereby a final sheet thickness of 0.25 mm was obtained. In the case of performing the intermediate annealing, the final rolling rate was adjusted to 35 %. In the case of not performing the intermediate annealing, the final annealing was performed by rolling the clad sheet to the final sheet thickness of 0.25 mm. After the annealing, the clad sheets were cooled from the annealing temperature down to 180 °C at the cooling rates listed in Tables 3 and 4. For the manufacturing process No. 16, the clad sheet was cooled at the cooling rate denoted in Table 3 after performing each of the intermediate annealing and the final annealing.

On each of the brazing sheet samples manufactured through the manufacturing processes listed in Tables 3 and 4, tensile strength representing the strength after the brazing, a fin joint rate representing the brazing properties, the occurrence of erosion and material melting, as well as Vickers hardness and corrosion resistance on the inner side (i.e., on the cooling water side of a heat exchanger), both representing overall corrosion resistance, were rated in accordance with the following methods.

### a. Tensile Strength after Brazing (N/mm²)

Each brazing sheet sample was heated under condition of 600 °C × 3 minutes for brazing, and then cooled down to 200 °C at the cooling rate of 60 °C/min. Thereafter, the brazing sheet sample was left to stand at room temperature for one week. The thus-obtained sample was subjected to a tensile test at ambient temperature in conformity with JIS Z2241 on conditions of a tension rate of 10 mm/min and a gauge length of 50 mm. The sample was rated acceptable when the tensile strength was not less than 140 N/mm², and unacceptable when it was less than 140 N/mm². Test results are listed in Tables 5 to 8.

### b. Fin Joint Rate

A fin material made of an alloy obtained by adding 1.5 % of Zn to an alloy defined in JIS3003 was corrugated and then combined to the brazing filler metal surface of the brazing sheet sample. Thereafter, a test core was fabricated by dipping the combined member in a flux suspension containing 10 % of fluoride, drying the same at 200 °C, and heating it at 600 °C × 3 minutes for brazing. In the test core thus obtained, a proportion of the number of jointed fin mountains with respect to the total number of fin mountains was determined as a fin joint rate. Furthermore, the brazing properties were rated acceptable (○) when the fin joint rate was not less than 95 %, and unacceptable (x) when the fin joint rate was less than 95 %. Test results are listed in Tables 5 to 8.

### c. Occurrence of Erosion and Material Melting

The occurrence of erosion (diffusion of the brazing alloy) and material melting in the core and the sacrificial anode material was confirmed by performing micro observation of a cross-section of the test core having been fabricated in above b. The test core was rated acceptable (○) when neither erosion nor material melting occurred, and unacceptable (×) when at least one of either erosion and material melting occurred. Test results are listed in Tables 5 to 8.

### d. Vickers Hardness

After heating at 600 °C × 3 minutes for brazing, each brazing sheet sample was cooled down to 200 °C at the cooling rate of 60 °C/min and then left to stand at room temperature for one week. The Vickers hardness of the sacrificial anode material was measured by employing a micro Vickers hardness tester at the surface of the sample on the side including the sacrificial anode material. The sample was rated acceptable (○) when the Vickers hardness was not less than 30 Hv, and unacceptable (×) when the Vickers hardness was less than 30 Hv. A test load was set to 5 g. Test results are listed in Tables 5 to 8.

### e. Corrosion Resistance on Cooling Water Side

A tubular test piece (TP) for a corrosion test was fabricated by forming each brazing sheet sample into a tubular shape, and by sealing abutted ends of the tube to be jointed with each other under heating at 600 °C × 3 minutes for brazing. Corrosion resistance on the cooling water side of a heat exchanger was evaluated by circulating, at a flow rate of 10 m/sec, an aqueous solution containing 195 ppm of Cl⁻, 60 ppm of SO₄²⁻, 1 ppm of Cu²⁺, and 30 ppm of Fe³⁺, and having a pH value adjusted to 10 with NaOH through the fabricated TP in a state contacting with its inner surface (i.e., the side including the sacrificial anode material), and by performing, for 3 weeks, a cycle test of heating the TP at 88 °C for 8 hours and, after cooling, holding the TP at room temperature in a radiational cooling state for 16 hours. Specifically, as the evaluation, the occurrence of piercing corrosion was confirmed on each sample. The sample was rated acceptable (○) when the piercing corrosion did not occur, and unacceptable (x) when the piercing corrosion occurred. Test results are listed in Tables 5 to 8.

Inventive Examples 1 to 22, 41 to 46, 54 to 58, 62 to 67, 69, 70, 72 and 73 were acceptable in all of the strength after the brazing, the fin joint rate, the erosion resistance, the melting resistance, the Vickers hardness of the sacrificial anode material, and the corrosion resistance on the cooling water side.

On the other hand, in Comparative Examples 23 to 32, the Zn component in the sacrificial anode material was too less, and hence the corrosion resistance on the cooling water side was unacceptable. In Comparative Examples 23, 26 and 28, the strength after the brazing was also unacceptable. In Comparative Example 32, the fin joint rate was further unacceptable. In Comparative Examples 24, 25 and 27, the erosion resistance and the melting resistance were further unacceptable.

### In Comparative Examples 29 and 31, G.C. generated.

The corrosion resistance on the cooling water side was unacceptable in Comparative Example 33 because the Si component in the sacrificial anode material was too less, in Comparative Example 34 because the Si component in the sacrificial anode material was too much, in Comparative Example 35 because the Fe component in the sacrificial anode material was too less, in Comparative Example 36 because the Fe component in the sacrificial anode material was too much, in Comparative Example 37 because the Zn component in the sacrificial anode material was too less, in Comparative Example 38 because the Zn component in the sacrificial anode material was too much, in Comparative Example 39 because the Ti component in the sacrificial anode material was too less, and in Comparative Example 40 because the Ti component in the sacrificial anode material was too much. In Comparative Example 33, the Vickers hardness was also unacceptable, and in Comparative Example 34, the material melting also occurred. Furthermore, in Comparative Examples 29 and 31, G.C. generated.

In Comparative Example 47, the Vickers hardness and the corrosion resistance on the cooling water side were unacceptable because the homogenization process was performed on the sacrificial anode material.

In Comparative Example 48, large edge chipping occurred because the start temperature of the hot rolling for the ingot of the sacrificial anode material was too low. Thus, no evaluation results were obtained on all the test items.

In Comparative Example 49, the Vickers hardness and the corrosion resistance on the cooling water side were unacceptable because the start temperature of the hot rolling for the ingot of the sacrificial anode material was too high.

In Comparative Example 50, a press-bonding failure of the clad sheet occurred because the start temperature of the hot rolling for the combined material was too low. Thus, no evaluation results were obtained on all the test items.

In Comparative Example 51, the Vickers hardness and the corrosion resistance on the cooling water side were unacceptable because the start temperature of the hot rolling for the combined material was too high.

In Comparative Example 52, large edge chipping occurred because the end temperature of the hot rolling for the combined material was too low. Thus, no evaluation results were obtained on all the test items.

In Comparative Example 53, the Vickers hardness and the corrosion resistance on the cooling water side were unacceptable because the end temperature of the hot rolling for the combined material was too high.

In Inventive Example 59, the erosion resistance and the melting resistance were unacceptable because the temperature of the intermediate annealing was too low. However, the example 59 was superior to any comparative examples in the corrosion resistance on the cooling water side of a heat exchanger.

In Comparative Example 60, twisting of the sample occurred because the temperature of the intermediate annealing was too high. Thus, no evaluation results were obtained on all the test items.

In Comparative Example 61, the corrosion resistance on the cooling water side was unacceptable because the Vickers hardness of the sacrificial anode material was low.

In Comparative Example 68, the corrosion resistance on the cooling water side was unacceptable because the Vickers hardness of the sacrificial anode material was low. The strength after the brazing, the erosion resistance, and the melting resistance were also unacceptable.

In Comparative Example 71, the Vickers hardness and the corrosion resistance on the cooling water side were unacceptable because the annealing temperature was too high.

### Industrial Applicability

Since the aluminum-alloy brazing sheet according to the present invention has characteristics being superior in corrosion resistance even under alkaline corrosive environments in spite of being thin, a light-weight and long-life heat exchanger having good thermal conductivity and good corrosion resistance can be obtained, for example, when the aluminum-alloy brazing sheet is used as a vehicular heat exchanger.

### List of Reference Symbols

- 10: brazing sheet
- 11: core
- 12: brazing filler metal
- 13: sacrificial anode material

## Claims

1. An aluminum-alloy brazing sheet comprising a core made of an aluminum alloy, a brazing filler metal made of an Al-Si based alloy and clad on one surface of the core, and a sacrificial anode material clad on the other surface of the core;
the sacrificial anode material being made of an aluminum alloy containing Si: 0.5 to 1.5 mass%, Fe: 0.5 to 1.5 mass%, Zn: 1.0 to 6.0 mass%, and Ti: 0.05 to 0.20 mass%, the balance of Al and unavoidable impurities;
the aluminum alloy of the core containing Si: 0.5 to 1.2 mass%, Fe: 0.05 to 0.60 mass%, Cu: 0.3 to 1.0 mass%, Mn : 0.5 to 1.6 mass%, and Ti: 0.05 to 0.20 mass%, the balance of Al and unavoidable impurities; and
Vickers hardness of the sacrificial anode material after heating conducted in the same way as the brazing of the brazing sheet being not less than 30 Hv.

2. The aluminum-alloy brazing sheet according to Claim 1, wherein the core is further configured to contain Mg: 0.05 to 0.60 mass%.

3. A method of manufacturing the aluminum-alloy brazing sheet according to Claim 1 or 2, comprising the steps of:
casting respective aluminum alloys of the core, the brazing filler metal, and the sacrificial anode material;
hot rolling each of respective ingots of the brazing filler metal and the sacrificial anode material to a predetermined thickness;
combining the brazing filler metal onto one surface of the ingot of the core and the sacrificial anode material onto the other surface of the ingot of the core to obtain a combined material;
cladding the combined material to obtain a clad sheet;
cold-rolling the clad sheet; and
annealing the clad sheet,
the aluminum alloy of the sacrificial anode material subjected to the casting step being configured to contain Si: 0.5 to 1.5 mass%, Fe: 0.5 to 1.5 mass%, Zn: 1.0 to 6.0 mass%, and Ti: 0.05 to 0.20 mass%, the balance of Al and unavoidable impurities;
the hot rolling step relative to the ingot of the sacrificial anode material being configured to start at temperature of 400 to 500 °C without performing a homogenization process;
the cladding step being configured to start at temperature of 400 to 500 °C and end at temperature of 200 to 400 °C; and
the annealing step including both or one of intermediate annealing performed midway the cold rolling step and final annealing performed after the cold rolling step, for the intermediate annealing, either a continuous annealing method at 350 to 550 °C for 0 to 1 minute or a batch annealing method at 200 to 400 °C for 1 to 8 hours being used, for the final annealing, the batch annealing method at 200 to 400 °C for 1 to 8 hours being used, and when both of the intermediate annealing and the final annealing are performed, the batch annealing method at 200 to 400 °C for 1 to 8 hours being used.

4. The method of manufacturing the aluminum-alloy brazing sheet according to Claim 3, further comprising a step, subsequent to the annealing step, of:
cooling the clad sheet from the annealing temperature down to 180 °C at an average cooling rate of not less than 20 °C/hour.
